# EUROPÄISCHE PATENTANMELDUNG

(11) **EP 4 636 028 A1**
(43) Veröffentlichungstag der Anmeldung: **22.10.2025**
(21) Anmeldenummer: 25168251.4
(22) Anmeldetag: 03.04.2025
(51) Int. Cl.: C08L 23/16

(54) **NACHHALTIGER WEICHMACHER FÜR EPDM**

(30) Priorität: 15.04.2024 DE 102024203451
(71) Anmelder: ContiTech Deutschland GmbH, 30175 Hannover (DE)
(72) Erfinder: Kanzow, Henning, 30175 Hannover (DE); Koo, Juny, 30175 Hannover (DE); Gaska, Roman, 30175 Hannover (DE); Jonczyk, Patrick, 30175 Hannover (DE); Well, Michael, 30175 Hannover (DE)
(74) Vertreter: Preusser, Andrea

(57) **Zusammenfassung**

Die Erfindung betrifft einen Elastomerartikel, umfassend mindestens eine Elastomerkomponente aus einer vernetzten Kautschukmischung, die ein Prozessöl auf Pflanzenölbasis als Weichmacher enthält, wobei das Prozessöl eine Jodzahl von weniger als 20 aufweist.

## Beschreibung

### Gebiet der Erfindung

Die Erfindung betrifft einen Elastomerartikel, insbesondere Antriebsriemen, der mindestens eine Elastomerkomponente aus einer vernetzten Kautschukmischung umfasst, die ein Prozessöl auf Pflanzenölbasis als Weichmacher enthält.

### Stand der Technik

Kautschukmischungen aus EPDM oder EPM enthalten gewöhnlich Kautschuk, Ruße oder Silika, Weichmacher und Vernetzungsmittel und diverse Komponenten. Als Weichmacher werden meist unterschiedliche Mineralölweichmacher verwendet, Die Zusammensetzung der Mineralölweichmacher kann paraffinisch, naphthenisch, aromatisch oder eine Kombination davon sein. Diese Stoffe sind kostengünstig, aber wie alle Mineralölerzeugnisse nicht nachhaltig.

EPDM und EPM-Mischungen werden in einer Vielzahl von Produkten eingesetzt, wie zum Beispiel als Dachbedeckungen, Dichtungen, Scheibenwischer, Transportbändern, Schläuchen und Antriebsriemen. In einigen Anwendungen wie bei Antriebriemen wird eine hohe Biegewechsel- und Alterungsbeständigkeit benötigt. Ein Beispiel für so einen Antriebsriemen sind Keilrippenriemen, wie sie für den Nebenaggregatetrieb für Verbrennungsmotoren verwendet werden.

Vernetzte EPDM-Mischungen, die Mineralölweichmacher enthalten, verändern ihre mechanischen Eigenschaften beim Einsatz bei hohen Temperaturen, da die eingesetzten Weichmacher flüchtig sind. Die Mischungen verlieren so im Betrieb kontinuierlich Weichmacher. Dadurch verhärten die Mischungen, wodurch die Lebensdauer des Produktes herabgesetzt werden kann.

EP 1 205 515 A1 beschreibt Elastomerzusammensetzungen, die ein Ethylenalpha-Olefin-Elastomer enthalten, das mit einem Metallsalz einer ungesättigten organischen Säure verstärkt ist, sowie Riemen und Flachriemen, die als Hauptteile des Riemenkörpers diese Elastomerzusammensetzungen enthalten. Die verwendeten Weichmacher sind auf Paraffinbasis.

DE 11 2013 005 123 T5 beschreibt Antriebsriemen, deren Außenumfangsfläche aus einer Gummizusammensetzung besteht. Die Gummizusammensetzung enthält verschiedene Bestandteile wie Verstärkungsmaterial oder Weichmacher, wobei als Weichmacher neben mineralölbasierten Weichmachern auch Weichmacher auf Pflanzenölbasis erwähnt werden.

DE 10 2008 037 714 A1 betrifft eine Kautschukmischung, die einen Weichmacher enthält, der frei von polyzyklischen Aromaten ist und dessen Kohlenstoffquelle aus nicht-fossilen Quellen stammt.

### Beschreibung der Erfindung

Vor diesem Hintergrund besteht ein Bedarf nach Elastomerartikeln bzw. Elastomerkomponenten, welche die vorstehend beschriebenen Nachteile im Stand der Technik lindern. Insbesondere bestand die Aufgabe der Erfindung in der Bereitstellung eines Elastomerartikels mit einer erhöhten Lebensdauer, insbesondere bei Hochtemperaturanwendungen. Insbesondere soll eine stattfindende Verhärtung des Elastomerartikels im Betrieb verringert werden. Darüber hinaus sollte die Lösung möglichst nachhaltig sein. Es versteht sich, dass die mechanischen Eigenschaften der Elastomerartikel zumindest in etwa auf dem Niveau des Standes der Technik liegen sollen.

Überraschenderweise haben die Erfinder festgestellt, dass diese Aufgabe gelöst werden kann, indem in einem Elastomerartikel bzw. in einer Elastomerkomponente davon als Weichmacher ein Prozessöl auf Pflanzenölbasis mit einer niedrigen Jodzahl von weniger als 20 eingesetzt wird.

Die Erfindung betrifft somit einen Elastomerartikel, umfassend mindestens eine Elastomerkomponente aus einer vernetzten Kautschukmischung, die ein Prozessöl auf Pflanzenölbasis als Weichmacher enthält, wobei das Prozessöl eine Jodzahl von weniger als 20 aufweist.

Durch den Einsatz eines solchen biobasierten Prozessöls als Weichmacher konnte im Vergleich zu den üblicherweise eingesetzten Mineralölweichmachern überraschenderweise eine höhere Lebensdauer des Produkts erreicht werden. So führte zum Beispiel der Einsatz des genannten biobasierten Prozessöls in EPDM/EPM-Mischungen in einem Keilrippenriemen zu verlängerten Laufzeiten.

Der Grund für diese Verbesserung ist unbekannt. Ohne sich an eine Theorie binden zu wollen, wird aber vermutet, dass sich Mineralölweichmacher leichter verflüchtigen als die erfindungsgemäß eingesetzten Prozessöle, was zu einer geringeren Verhärtung des Elastomerartikels über die Betriebsdauer führen kann. Dies könnte z.B. an unterschiedlichen Siedebereichen liegen oder daran, dass das erfindungsgemäß eingesetzte Prozessöl während der Vulkanisation, insbesondere der peroxidischen Vulkanisation, eher mitvernetzt als der Mineralölweichmacher.

Ein weiterer Vorteil ist, dass die eingesetzten Prozessöle auf Pflanzenölbasis biobasierte Produkte sind und somit nachhaltiger sind als Mineralölweichmacher, die auf fossilen Rohstoffen basieren. Es ergibt sich somit eine bessere Ökobilanz mit einem negativen CO₂-Fußabdruck für den eingesetzten biobasierten Weichmacher.

Zusammenfassend bietet der Einsatz der erfindungsgemäß eingesetzten biobasierten Prozessöle als Weichmacher Vorteile in Bezug auf die Nachhaltigkeit und die Leistungsfähigkeit von Elastomerartikeln durch eine erhöhte Lebensdauer bzw. eine verringerte Verhärtung im Betrieb und eine bessere Ökobilanz gegenüber mineralölbasierten Weichmachern.

Dabei sind die mechanischen Eigenschaften der erfindungsgemäßen Elastomerartikel vergleichbar mit solchen, die auf den üblichen Mineralölweichmachern basieren, und können sogar überlegen sein.

Die Erfindung wird nachstehend im Einzelnen beschrieben.

Der erfindungsgemäße Elastomerartikel umfasst mindestens eine Elastomerkomponente aus der nachstehend beschriebenen Kautschukmischung. Der Elastomerartikel kann aus der mindestens einen Elastomerkomponente bestehen oder bevorzugt weitere Komponenten enthalten.

Die mindestens eine Elastomerkomponente ist aus einer Kautschukmischung, die ein Prozessöl auf Pflanzenölbasis als Weichmacher enthält.

Weichmacher machen Elastomere weicher, flexibler, geschmeidiger und elastischer. Sie verschieben den thermoelastischen Bereich zu niedrigeren Temperaturen, so dass der Kunststoff im Bereich der Anwendungstemperatur die gewünschten elastischen Eigenschaften aufweist. Wenn Weichmacher aus dem Material entweichen, kann das Material schrumpfen, spröder werden und schließlich reißen.

Das erfindungsgemäß eingesetzte Prozessöl auf Pflanzenölbasis weist eine Jodzahl von weniger als 20 auf. Das Prozessöl weist bevorzugt eine Jodzahl von weniger als 10, bevorzugter weniger als 5 und besonders bevorzugt weniger als 3 auf.

Die Jodzahl ist insbesondere ein Maß für den Gehalt an ungesättigten Verbindungen bzw. Doppelbindungen in dem Prozessöl. Die Jodzahl kann nach der Messmethode nach Kaufmann gemäß DIN EN ISO 3961:2018-11 bestimmt werden.

Die Untersuchungen zum Ersatz von Mineralölen als Weichmacher in Elastomerartikeln durch Prozessölen auf Pflanzenölbasis ergaben, dass insbesondere Prozessöle auf Pflanzenölbasis mit sehr niedrigen Jodzahlen zu einer Verlängerung der Lebensdauer von Elastomerartikeln führen kann. Als Lebensdauer wird in diesem Zusammenhang die experimentell bestimmte Dauer bis zum Ausfall bzw. Versagen des Elastomerartikels verstanden.

Vorzugsweise weist das Prozessöl auf Pflanzenölbasis in der Elastomerkomponente des erfindungsgemäßen Elastomerartikels eine obere Siedebereichsgrenze von 150 bis 600 °C, bevorzugt von 200 bis 500 °C, besonders bevorzugt von 225 bis 480 °C, auf.

Der erfindungsgemäß eingesetzte Weichmacher ist ein Prozessöl auf Pflanzenölbasis. Es handelt sich somit um ein Prozessöl, das ein oder mehrere Pflanzenöle oder deren Derivate oder eine Kombination enthält. Der Anteil an Pflanzenölen und/oder deren Derivate in dem Prozessöl kann z.B. 80 bis 100 Gew.-%, bevorzugt 90 bis 100 Gew.-% und bevorzugter 95 bis 100 Gew.-% betragen. Im Allgemeinen ist es bevorzugt, dass das Prozessöl im Wesentlichen oder vollständig aus einem oder mehreren Pflanzenölen und/oder deren Derivaten besteht.

Unter Pflanzenölderivaten werden hier insbesondere chemisch modifizierte Pflanzenöle, bevorzugt enzymatisch reduzierte Pflanzenöle oder zumindest teilweise hydrierte Pflanzenöle verstanden. Es kann sich dabei um chemischen Modifizierungen handeln, die auf dem Gebiet üblich sind. In einer bevorzugten Ausführungsform handelt es sich bei der chemischen Modifizierung um eine Hydrierung. Die Hydrierung ist eine chemische Reaktion, bei der Wasserstoff an eine Kohlenstoff-Kohlenstoff-Doppelbindung addiert wird. Eine alternative Modifikation der Pflanzenöle kann durch enzymatische Reduktionsreaktion erfolgen. Durch diese Modifikationen kann die Jodzahl der Pflanzenöle reduziert werden, um die gewünschte Jodzahl einzustellen. Die Modifikation von Pflanzenölen durch Hydrierung oder durch enzymatische Reduktion ist in der Technik seit langem gut bekannt und wird in technischem Maßstab eingesetzt.

Das erfindungsgemäß eingesetzte Prozessöl auf Pflanzenölbasis enthält bevorzugt ein oder mehrere Pflanzenöle, deren Derivate oder eine Kombination davon, wobei die Pflanzenölderivate zumindest teilweise chemisch modifizierte, insbesondere zumindest teilweise hydrierte oder enzymatisch reduzierte Pflanzenöle, sind. Besonders bevorzugt sind die Pflanzenölderivate zumindest teilweise hydrierte Pflanzenöle.

Das Pflanzenöl oder die Pflanzenöle des Prozessöls sind vorzugsweise ausgewählt aus der Gruppe bestehend aus Kokosöl, Neutralöl, Palmkernöl, Babassuöl, Palmöl, Olivenöl, Avocadoöl, Mandelöl, Palmöl, Rizinusöl, Maiskeimöl, Zuckerrohröl, Sonnenblumenöl, Rapsöl, Sesamöl, Weizenkeimöl, Sojaöl, Erdnussöl, Distelöl, Hanföl, Mohnöl, Traubenkernöl, Walnussöl, Wildrosenöl oder Johannisbeerkernöl. Wie gesagt können das oder die Pflanzenöle teilweise oder vollständig in Form ihrer Derivate vorliegen.

Das erfindungsgemäße Prozessöl auf Pflanzenbasis enthält bevorzugt mindestens zwei, bevorzugt mindestens drei, Pflanzenöle oder deren Derivate.

Ohne an eine bestimmte Theorie gebunden zu sein, haben sich bestimmte Pflanzenöle und deren Kombinationen als Basis für das verwendete Prozessöl besonders bewährt. Überraschenderweise führte insbesondere eine Kombination von bestimmten Pflanzenölen und/oder deren Derivaten als Basis für das verwendete Prozessöl auf Pflanzenölbasis zu einer besonders starken Erhöhung der Lebensdauer.

Vorzugsweise enthält das Prozessöl auf Pflanzenbasis ein oder mehrere Pflanzenöle ausgewählt aus Sonnenblumenöl, Palmöl, Zuckerrohröl und Sojaöl und/oder deren Derivate, wobei eine Kombination von Sonnenblumenöl, Palmöl, Zuckerrohröl und Sojaöl und/oder deren Derivaten besonders bevorzugt ist.

Der Mengenanteil des Prozessöls auf Pflanzenbasis in der Elastomerkomponente kann 1 bis 50 phr, bevorzugt 2 bis 20 phr, bevorzugter 5 bis 15 phr, besonders bevorzugt 8 bis 12 phr, betragen.

Die Kautschukmischung enthält eine oder mehrere Kautschuke. Die in der Kautschukmischung verwendeten Kautschuke sind nicht beschränkt, es hat sich aber gezeigt, dass bestimmte Kautschuke und Kautschukmischungen besonders gut in Kombination mit dem auf Pflanzenöl basierenden Prozessöl geeignet sind.

Vorzugsweise umfasst die Kautschukmischung daher Ethylen-Propylen-Dien-Kautschuk (EPDM), Ethylen-Propylen-Kautschuk (EPM) oder eine Mischung von EPDM und EPM.

Besonders bevorzugt beträgt der Anteil an EPDM, EPM oder eine Mischung davon in der Kautschukmischung für die Elastomerkomponente mindestens 50 phr, z.B. 50 bis 100 phr, bevorzugt 75 bis 100 phr.

Die Elastomerkomponente aus der Kautschukmischung wird wie üblich durch Vernetzung der unvernetzten Kautschukmischung gebildet. Die Vernetzung wird allgemein auch als Vulkanisation bezeichnet. Die Kautschukmischung enthält für die Vernetzung in der Regel ein Vernetzungsmittel, welches auch als Vulkanisiermittels bezeichnet wird, z.B. ein Schwefel-basierte Vernetzungsmittel oder ein Peroxid-Vernetzungsmittel.

Vorzugsweise ist die Kautschukmischung der mindestens einen Elastomerkomponente peroxidisch vernetzt.

Die Kautschukmischung bzw. die Elastomerkomponente kann ferner ein oder mehrere weitere Additive enthalten, die in der Technik üblich sind. Beispiele für solche Additive sind zusätzliche Prozessöle oder Weichmacher, die von dem Prozessöl auf Pflanzenölbasis verschieden sind, z.B. Weichmacher auf Mineralölbasis, Füllstoffe, z.B. Ruß, Kieselsäure oder Calciumcarbonat, Magnesiumoxid, Verarbeitungshilfsmittel, Alterungsschutzmittel oder Kombinationen davon.

Der erfindungsgemäße Elastomerartikel kann weitere Komponenten aufweisen, wie z.B. einen Festigkeitsträger, einen textilen Flächenkörper oder weitere Elastomerkomponenten. Je nach gewünschter Ausgestaltung des erfindungsgemäße Elastomerartikels, kann der Elastomerartikel auch Kombinationen von verschiedenen Komponenten umfassen, insbesondere kann der Elastomerartikel einen Festigkeitsträger und einen textilen Flächenkörper aufweisen.

In einer bevorzugten Ausführungsform umfasst der erfindungsgemäße Elastomerartikel einen textilen Flächenkörper in Form eines Gewebes, eines Gewirkes oder eines Gestrickes, wobei ein Gestrick bevorzugt ist.

Der textile Flächenkörper, insbesondere das Gestrick, bzw. die Garne oder Fasern, aus denen der textile Flächenkörper gebildet ist, können z.B. aus Polyamid (PA), Polyester, Naturfasern, wie z.B. Baumwolle, Aramid, Cellulose, Polyurethan, Polyetheretherketon (PEEK), Polyimid (PI) oder einer Kombination davon gebildet sein. In einer bevorzugten Ausführungsform ist der textile Flächenkörper, insbesondere das Gestrick, aus Polyamid gebildet.

Die gegebenenfalls in dem erfindungsgemäßen Elastomerartikel eingesetzten textilen Flächenkörpern können mit einer polymeren Ausrüstung bzw. Imprägnierung versehen sein.

In einer bevorzugten Ausführungsform umfasst der erfindungsgemäße Elastomerartikel einen Festigkeitsträger, wobei ein Festigkeitsträger aus einem oder mehreren Zugsträngen bevorzugt ist. Dies ist z.B. für Antriebsriemen, wie z.B. Keilriemen oder Keilrippenriemen bevorzugt.

Wenn der Festigkeitsträger aus mehreren Zugsträngen gebildet ist, können diese nebeneinander angeordnet sein und eine Festigkeitsträgerlage bilden. Der Festigkeitsträger im Grundkörper kann durch eine Festigkeitsträgerlage oder mehrere Festigkeitsträgerlagen gebildet sein. Der Zugstrang, insbesondere in Form von Corden, kann z.B. aus Polyamid (PA), Aramid, Polyester, Glas, Kohlefasern, Polyetheretherketon (PEEK) oder Polyethylen-2,6-naphthalat (PEN) oder Kombinationen daraus (Hybrid-Cord) gebildet sein.

In einer besonders bevorzugten Ausführungsform umfasst der erfindungsgemäße Elastomerartikel einen Festigkeitsträger aus einem oder mehreren Zugsträngen aus Polyester.

In einer besonders bevorzugten Ausführungsform umfasst der erfindungsgemäße Elastomerartikel einen textilen Flächenkörper, insbesondere ein Gestrick aus Polyamid, und einen Festigkeitsträger, insbesondere einen Festigkeitsträger aus einem oder mehreren Zugsträngen, bevorzugt aus Polyester.

Der textile Flächenkörper kann auf einer Oberfläche des Elastomerartikels, insbesondere auf der Oberfläche der Elastomerkomponente, angeordnet sein, z.B. auf der Lauffläche bzw. der Kraftübertragungszone eines Antriebsriemens, wie eines Keilriemens.

Der Festigkeitsträger, insbesondere in Form von einem oder mehreren Zugsträngen, kann in der erfindungsgemäß ausgestalteten Elastomerkomponente oder einer anderen Elastomerkomponente des Elastomerartikels eingebettet sein.

Der erfindungsgemäße Elastomerartikel kann unterschiedlich ausgestaltet und für verschiedene Anwendungen eingesetzt werden Der erfindungsgemäße Elastomerartikel ist aufgrund seiner guten Haltbarkeit und Langlebigkeit vor allem in verschließintensiven Bereichen und/oder für den Betrieb bei hohen Temperaturen geeignet.

Der erfindungsgemäße Elastomerartikel kann bevorzugt ein Antriebsriemen, ein Schlauch, eine Dachabdeckung, eine Dichtung, ein Scheibenwischer oder ein Transportband sein. Besonders bevorzugt ist der erfindungsgemäße Elastomerartikel ein Antriebsriemen, eine Luftfeder, ein Schlauch oder ein Transportband. Am meisten bevorzugt ist der erfindungsgemäße Elastomerartikel ein Antriebsriemen, bevorzugt ein Keilriemen, insbesondere ein Keilrippenriemen, vorzugsweise ein Keilrippenriemen mit PK-Profil.

Keilrippenriemen können nach der "PK"-Nummer klassifiziert werden, wobei das "P" eine metrische Bezeichnung angibt und das "K" darauf hinweist, dass der Keilrippenriemen für die Automobilindustrie nach SAE J1459 geeignet ist.

Der Antriebsriemen, bevorzugt Keilriemen, insbesondere Keilrippenriemen, kann z.B. eine Elastomerkomponente als Unterbau, darin eingebettete Zugstränge als Festigkeitsträger wie vorstehend beschrieben und eine darüber liegende Elastomerkomponente als Decklage aufweisen. Bevorzugt ist dabei die als Unterbau eingesetzte Elastomerkomponente, die erfindungsgemäße Elastomerkomponente, die das spezifizierte Prozessöl auf Pflanzenbasis aufweist. Der Unterbau kann eine profilierte Oberfläche als Kraftübertragungszone aufweisen. Die Oberfläche des Unterbaus, die als Kraftübertragungszone dient, kann mit einem textilen Flächenkörper wie vorstehend beschrieben versehen sein.

Die vorliegende Erfindung betrifft auch die Verwendung des erfindungsgemäßen Keilrippenriemens, bevorzugt mit PK-Profil, wie vorstehend beschrieben in einem Nebenaggregatetrieb eines Verbrennungsmotors.

Der erfindungsgemäße Elastomerartikel, insbesondere in Form eines Antriebsriemens, eignet sich insbesondere für Hochtemperaturanwendungen, bei denen eine Betriebstemperatur von über 80°C, bevorzugt über 100°C, erreicht wird.

Für die erfindungsgemäßen Verwendungen gelten alle Angaben, die vorstehend für den erfindungsgemäßen Elastomerkörper angeführt wurden, in gleicher Weise, so dass darauf Bezug genommen wird.

Die Erfindung wird nachstehend anhand von Ausführungsbeispielen näher erläutert, die den Umfang der Erfindung in keiner Weise einschränken sollen.

### Beispiele

### Kautschukmischungen

Es wurden zwei Kautschukmischungen KM1 und KM2 hergestellt, die sich lediglich durch die Auswahl der als Weichmacher eingesetzten Prozessöle unterscheiden.

Die Kautschukmischung KM1 ist eine Referenzmischung und enthält ein Prozessöl auf Mineralölbasis mit einer Jodzahl von 13,7 als Weichmacher. In der erfindungsgemäßen Kautschukmischung KM2 wird das in KM1 eingesetzte Prozessöl auf Mineralölbasis durch ein Prozessöl auf Pflanzenölbasis mit einer Jodzahl von 0,74 und einem Siedebereich von 270-440°C als Weichmacher ersetzt.

Die Bestandteile der Kautschukmischungen sind in nachstehender Tabelle aufgelistet.

| | KM 1 | KM 2 |
|---|---|---|
| Bestandteil | Menge in phr | Menge in phr |
| EPDM (Kautschuk) | 100 | 100 |
| Ruß (Füllstoff) | 60 | 60 |
| Magnesiumoxid | 5 | 5 |
| Alterungsschutzmittel | 2 | 2 |
| ZnO (Vernetzungsmittel) | 5 | 5 |
| Mineralölbasiertes Prozessöl, Jodzahl 13,7 (Weichmacher) | 10 | - |
| Pflanzenölbasiertes Prozessöl, Jodzahl = 0,74 (Weichmacher) | - | 10 |
| TDAE-Öl (Verarbeitungsöl) | 5 | 5 |
| Peroxid-Vernetzungsmittel | 7 | 7 |

### Beispiel 1 (Referenz)

Es wurde ein Keilrippriemen (6PK-Keilrippenriemen (6PK1328) hergestellt. Der Aufbau des Keilrippenriemens umfasst Elastomerkomponenten als Unterbau und Decklage, Polyesterzugsträngen und ein Polyamidgestrick als Beschichtung auf der Kraftübertragungszone (auf dem Unterbau).

Die Elastomerkomponente des Unterbaus wurde aus der vorstehend angegebenen Kautschukmischung KM1 gebildet. Die Decklage wurde aus einer EPDM/EPM-Kautschukmischung gebildet. Hierfür wurden die Kautschukmischungen peroxidisch vernetzt.

### Beispiel 2 (Erfindung)

Ein Keilrippenriemen wurde auf die gleiche Weise wie in Beispiel 1 hergestellt, außer das für den Unterbau die vorstehend angegebene Kautschukmischung KM2 statt der Kautschukmischung KM1 eingesetzt wurde.

Die Keilrippenriemen der Beispiele 1 und 2 weisen den gleichen Aufbau auf und unterscheiden sich lediglich bezüglich des verwendeten Prozessöls in der Kautschukmischung für den Unterbau.

### Mechanischen Eigenschaften der hergestellten Keilrippenriemen

Die Keilrippenriemen gemäß Beispiel 1 und Beispiel 2 wurden unter den gleichen Bedingungen in Zugversuchen in Quer- und Längsrichtung gemäß DIN 53504:2017-03 geprüft. Weiterhin wurde die Shore A-Härte gemäß DIN ISO 7619-1:2012-02 geprüft. Die ermittelten Messwerte sind in nachstehender Tabelle zusammengefasst.

| | | | Beispiel 1 (mit KM1) | Beispiel 2 (mit KM2) |
|---|---|---|---|---|
| Zugversuch (längs) | | | | |
| | Modul 50% | MPa | 3 | 3,4 |
| | Modul 100% | MPa | 6,8 | 7,9 |
| | Reißfestigkeit | MPa | 23,8 | 24,6 |
| | Bruchdehnung | % | 265,9 | 239,8 |

| Zugversuch (quer) | | | | |
|---|---|---|---|---|
| | Modul 50% | MPa | 2,7 | 3,2 |
| | Modul 100% | MPa | 6,1 | 7,4 |
| | Reißfestigkeit | MPa | 21 | 21,9 |
| | Bruchdehnung | % | 253,1 | 232,4 |
| Shore A-Härte | | | 79 | 80 |

Die Testergebnisse zeigen vergleichbare mechanische Werte für die Keilrippenriemen von Beispiel 1 und 2, wobei für das erfindungsgemäße Beispiel 2 teilweise leicht bessere Werte erhalten werden.

### Prüfung Lebensdauer der hergestellten Keilrippenriemen

Ferner wurden die Lebensdauer der Keilrippenriemen von Beispiel 1 und 2 anhand einer Überlastprüfung bestimmt. Es wurde zwei Keilrippenriemen gemäß Beispiel 2 getestet.

Hierfür wird ein 5-Scheiben-Lebensdauerprüfstand genutzt, um die Lebensdauer der hergestellten Keilrippenriemen bei einer Kammertemperatur von 130°C zu bestimmen. Die Antriebsdrehzahl betrug 5000 min⁻¹, das Lastmoment 22,8 Nm und die Achskraft 660 N. Zum Start wurden die Keilrippenriemen von Hand durchgedreht, bis die Achskraft annährend konstant bleibt. Sobald die Rippen des Riemens drei Anbrüche aufweisen, wird die Prüfung gestoppt und die Lebensdauer in Stunden angegeben.

Die Riemen gemäß dem erfindungsgemäßen Beispiel 2 erreichten eine Lebensdauer im Mittel von 257 h, bevor die Riemen An- und Ausbrüche gemäß dem Testprotokoll aufwiesen.

Riemen gemäß Beispiel 1 (Referenz) erreichten dagegen durchschnittliche Laufzeiten von ca. 150 h.

Somit zeigt sich eine deutlich höhere Lebensdauer für die erfindungsgemäßen Antriebsriemen gemäß Beispiel 2 im Vergleich zu den Antriebsriemen gemäß Beispiel 1 nach dem Stand der Technik.

## Patentansprüche

1. Elastomerartikel, umfassend mindestens eine Elastomerkomponente aus einer vernetzten Kautschukmischung, die ein Prozessöl auf Pflanzenölbasis als Weichmacher enthält, wobei das Prozessöl eine Jodzahl von weniger als 20 aufweist.

2. Elastomerartikel nach Anspruch 1, wobei das Prozessöl eine Jodzahl von weniger als 10, bevorzugt weniger als 5, besonders bevorzugt weniger als 3, aufweist.

3. Elastomerartikel nach Anspruch 1 oder 2, wobei das Prozessöl ein oder mehrere Pflanzenöle, deren Derivate oder eine Kombination davon enthält, wobei die Pflanzölderivate zumindest teilweise chemisch modifizierte Pflanzenöle, insbesondere zumindest teilweise hydrierte oder enzymatisch reduzierte Pflanzenöle, bevorzugt zumindest teilweise hydrierte Pflanzenöle, sind.

4. Elastomerartikel nach einem der vorhergehenden Ansprüche, wobei das oder die Pflanzenöle oder deren Derivate ausgewählt sind aus der Gruppe bestehend aus Kokosöl, Neutralöl, Palmkernöl, Babassuöl, Palmöl, Olivenöl, Avocadoöl, Mandelöl, Palmöl, Rizinusöl, Maiskeimöl, Zuckerrohröl, Sonnenblumenöl, Rapsöl, Sesamöl, Weizenkeimöl, Sojaöl, Erdnussöl, Distelöl, Hanföl, Mohnöl, Traubenkernöl, Walnussöl, Wildrosenöl, Johannisbeerkernöl oder deren Derivaten.

5. Elastomerartikel nach einem der vorhergehenden Ansprüche, wobei das Prozessöl auf Pflanzenbasis mindestens zwei, bevorzugt mindestens drei, Pflanzenöle, und/oder deren Derivate enthält.

6. Elastomerartikel nach einem der vorhergehenden Ansprüche, wobei das Prozessöl auf Pflanzenbasis ein oder mehrere Pflanzenöle oder deren Derivate ausgewählt aus Sonnenblumenöl, Palmöl, Zuckerrohröl, Sojaöl und/oder deren Derivate enthält, wobei eine Kombination von Sonnenblumenöl, Palmöl, Zuckerrohröl und Sojaöl und/oder deren Derivaten bevorzugt ist.

7. Elastomerartikel nach einem der vorhergehenden Ansprüche, wobei der Mengenanteil des Prozessöls auf Pflanzenbasis in der Elastomerkomponente 1 bis 50 phr, bevorzugt 2 bis 20 phr, bevorzugter 5 bis 15 phr, besonders bevorzugt 8 bis 12 phr, beträgt.

8. Elastomerartikel nach einem der vorhergehenden Ansprüche, wobei die Kautschukmischung Ethylen-Propylen-Dien-Kautschuk (EPDM), Ethylen-Propylen-Kautschuk (EPM) oder eine Mischung davon umfasst, wobei der Anteil an EPDM und/oder EPM in der Kautschukmischung bevorzugt mindestens 50 phr beträgt.

9. Elastomerartikel nach einem der vorhergehenden Ansprüche, wobei die Kautschukmischung peroxidisch vernetzt ist.

10. Elastomerartikel nach einem der vorhergehenden Ansprüche, wobei der Elastomerartikel einen textilen Flächenkörper in Form eines Gewebes, eines Gewirkes oder eines Gestrickes, bevorzugt eines Gestrickes, besonderer bevorzugt eines Gestrickes aus Polyamid, umfasst.

11. Elastomerartikel nach einem der vorhergehenden Ansprüche, wobei der Elastomerartikel einen Festigkeitsträger, bevorzugt aus einem oder mehreren Zugsträngen, besonders bevorzugt aus einem oder mehreren Zugsträngen aus Polyester, umfasst.

12. Elastomerartikel nach einem der vorhergehenden Ansprüche, wobei der Elastomerartikel ein Antriebsriemen, eine Luftfeder, ein Schlauch, eine Dachabdeckung, eine Dichtung, ein Scheibenwischer oder ein Transportband, bevorzugt ein Antriebsriemen, eine Luftfeder, ein Schlauch oder ein Transportband, insbesondere ein Antriebsriemen, ist.

13. Elastomerartikel nach einem der vorhergehenden Ansprüche, wobei der Elastomerartikel ein Keilriemen oder ein Keilrippenriemen, bevorzugt ein Keilrippenriemen mit PK-Profil, ist.

14. Verwendung eines Antriebsriemens, bevorzugt Keilrippenriemens, insbesondere mit PK-Profil, nach Anspruch 12 oder 13 in einem Nebenaggregatetrieb eines Verbrennungsmotors.

15. Verwendung eines Elastomerartikels nach einem der Ansprüche 1 bis 13, insbesondere eines Antriebsriemens, für Hochtemperaturanwendungen, bei denen eine Betriebstemperatur von über 80°C, bevorzugt über 100°C, erreicht wird.
